# EUROPÄISCHE PATENTANMELDUNG

(11) **EP 0 568 054 A1**
(43) Veröffentlichungstag der Anmeldung: **03.11.1993**
(21) Anmeldenummer: 93106925.6
(22) Anmeldetag: 28.04.1993
(51) Int. Cl.: A22B 5/00

(54) **Verfahren zur Aufnahme und zum Verfahren von Schlachttierinnereien aus einer Aufnahmeposition in eine Übergabeposition sowie Vorrichtung zur Durchführung des Verfahrens**

(30) Priorität: 28.04.1992 DE 4213946
(71) Anmelder: Banss Maschinenfabrik GmbH & Co. KG, D-35216 Biedenkopf (DE)
(72) Erfinder: Henkel, Heinz, W-3563 Dautphetal-Freidensdorf (DE)
(74) Vertreter: Klunker . Schmitt-Nilson . Hirsch

(57) **Zusammenfassung**

Vorrichtung zur Aufnahme von Schlachttierkörperteilen, insbesondere Innereien, in einer Aufnahmeposition und zur Übergabe der aufgenommenen Schlachttierteile in einer Übergabeposition an eine stillstehende oder fördernde Aufnahmeeinrichtung, mit einem mittels einer Eingriffseinrichtung (27,28,29,30) in einer Führungseinrichtung (17) geführten Aufnahmebehälter (16), und einer Antriebseinrichtung (18,19) zum Verfahren des Aufnahmebehälters (16) aus der Aufnahmeposition in die Übergabeposition längs der Führungseinrichtung (17), wobei in der Führungseinrichtung (17) ausgebildete Führungsbahnen (21,22,23,24) eine kurvenbahnartige Ausbildung aufweisen zum Verschwenken des Aufnahmebehälters (16) um eine horizontale Behälterachse (Schwenkachse) beim Verfahren aus der Aufnahmeposition in die Übergabeposition, sowie ein Verfahren zum Betreiben der Vorrichtung.

## Beschreibung

Die vorliegende Erfindung betrifft eine Vorrichtung zur Aufnahme von Schlachttierkörperteilen, insbesondere Innereien, in einer Aufnahmeposition und zur Übergabe der aufgenommenen Schlachttierteile in einer Übergabeposition an eine Aufnahmeeinrichtung. Weiterhin betrifft die Erfindung ein Verfahren zum Betreiben der Vorrichtung.

In einer Schlachtanlage durchlaufen die Schlachttiere bzw. Schlachttierkörper verschiedene Bearbeitungsbereiche, die vom Töten des Schlachttiers bis hin zur versandfertigen Bereitstellung von Schlachttierkörperteilen reichen.

In einem Bereich der Schlachtlinie erfolgt nach Ausblutung und öffnung der Schlachttierkörper die Organentnahme aus den Schlachttierkörpern zum Zwecke der Weiterverarbeitung oder zu Untersuchungszwecken. Insbesondere bei Rindern oder Kälbern weisen die verschiedenen Organe oder Organgruppen eine Masse auf, die besondere Maßnahmen für die Organentnahme und Weiterbeförderung der entnommenen Organe notwendig machen.

Die größte zu handhabende Masse bei der Organentnahme weist bei Rindern bzw. Kälbern das sogenannte "Pansenpaket" auf. Mit diesem Begriff wird eine Organgruppe bezeichnet, die aus den Mägen bzw. den Mägen und dem Darmtrakt des Schlachttieres besteht.

Bei Rindern und Kälbern erfolgt die Entnahme des Pansenpaketes im Organentnahmebereich der Schlachtlinie nach Auftrennung des an den Hinterbeinen aufgehängten Schlachttierkörpers im Brust- und Bauchbereich.

Hierzu ist es bekannt, das Pansenpaket nach Öffnung des Schlachttierkörpers in einen Aufnahmebehälter fallenzulassen und diesen anschließend in eine weitere Aufnahmeeinrichtung, die zum Weitertransport oder zur Untersuchung des Pansenpaketes dient, zu entleeren. Hierbei erweist es sich in der Regel als notwendig, den zur Aufnahme des Pansenpakets unterhalb des Schlachttierkörpers angeordneten Aufnahmebehälter auf die für die Entleerung in die Aufnahmeeinrichtung erforderliche Höhe zu heben und den Aufnahmebehälter dann durch Ausführung einer entsprechenden Kippbewegung in die Aufnahmeeinrichtung zu entleeren. Bei dem geschilderten Vorgang handelt es sich um einen während des Betriebs einer Schlachtlinie häufig wiederkehrenden Vorgang, der erfolgt, während die Schlachttierkörper durch den Organentnahmebereich transportiert werden.

Weiterhin ist es bekannt, den Aufnahmebehälter zur Aufnahme des Pansenpaketes mulden- oder rutschenförmig auszubilden und einen derartigen Aufnahmebehälter zusammen mit einer im Organentnahmebereich vorgesehenen Arbeitsbühne auf- und abzubewegen. Bei der Organentnahme wird der Aufnahmebehälter horizontal an den Schlachttierkörper herangeführt. Aus hygienischen Gründen ist der dabei in der Praxis unvermeidbare Kontakt zwischen dem Aufnahmebehälter und dem Schlachttierkörper nicht erwünscht.

Der vorliegenden Erfindung liegt daher die Aufgabe zugrunde, eine Vorrichtung zu schaffen, die die Aufnahme von Innereien, insbesondere des Pansenpaketes, aus einem Schlachttierkörper und deren Weiterbeförderung zur Übergabe an eine Aufnahmeeinrichtung möglichst einfach und energiesparend ermöglicht, und deren Einsatz unter Vermeidung jeglichen Kontakts zwischen der Vorrichtung und dem Schlachttierkörper möglich ist, ohne den Transport der Schlachttierkörper durch den Organentnahmebereich zu behindern.

Diese Aufgabe wird durch die Merkmale des Anspruchs 1 gelöst.

Die erfindungsgemäße Vorrichtung weist einen Aufnahmebehälter auf, der über eine Eingriffseinrichtung in einer Führungseinrichtung geführt ist. Die Führungseinrichtung weist Führungsbahnen auf, die beim Verfahren des Aufnahmebehälters durch Betätigung einer Antriebseinrichtung aus der Aufnahmeposition in die Übergabeposition aus einem Bereich unterhalb des Schlachttierkörpers auf die für die Entleerung in die Aufnahmeeinrichtung erforderliche Höhe auch für ein zum Entleeren in die Aufnahmeeinrichtung erforderliches Verschwenken des Aufnahmebehälters sorgen. Wegen der kurvenbahnartigen Ausbildung der Führungsbahnen ist sowohl die aus der Aufnahmeposition herausführende Translationsbewegung des Aufnahmebehälters als auch dessen Rotationsbewegung zum Ausleeren mittels einer Antriebseinrichtung möglich. Bei der Aufnahmeeinrichtung kann es sich um eine stillstehende oder fördernde Aufnahmeeinrichtung handeln.

Zum einen ist hierdurch ein besonders ökonomischer Betrieb der Vorrichtung gegeben, zum anderen zeichnet sich die Vorrichtung durch einen möglichst einfachen, kompakten Aufbau aus, der einen Betrieb der erfindungsgemäßen Vorrichtung während der Förderung der Schlachttierkörper durch den Organentnahmebereich ohne Behinderungen ermöglicht. Insbesondere wird jedoch hierdurch jeglicher Kontakt zwischen einem Schlachttierkörper und der Aufnahmevorrichtung vermieden.

Bei einem bevorzugten Ausführungsbeispiel der erfindungsgemäßen Vorrichtung sind die Führungsbahnen der Führungseinrichtung aus vier paarweise gleich ausgerichteten Führungsschienen gebildet, in die jeweils ein an der Behälterwand angeordnetes Eingriffsteil eingreift. Der Aufbau der Führungseinrichtung aus einzelnen Führungsschienen ermöglicht einen besonders leichtgewichtigen Aufbau der Führungseinrichtung, wodurch beispielsweise die Möglichkeit gegeben ist, die Führungseinrichtung mit ohnehin im Organentnahmebereich angeordneten Einrichtungen zu koppeln, so daß auf ein gesondertes, etwa als Standgestell ausgeführtes Gestell zur Aufnahme der Führungsschienen verzichtet werden kann.

Zur Bildung zweier Führungsebenen können jeweils zwei unterschiedlich ausgebildete Führungsschienen zu einer Seite des Aufnahmebehälters miteinander verbunden sein, in die zwei mit einer entsprechenden Seitenwandung des Behälters verbundene Eingriffsteile eingreifen.

Die in einer Führungsebene der Führungseinrichtung angeordneten Führungsschienen weisen jeweils vorteilhafterweise zwei geradlinig ausgebildete Führungsbereiche auf, die durch einen gekrümmten Übergangsbereich miteinander verbunden sind. Hierbei sind die der Aufnahmeposition des Aufnahmebehälters zugeordneten Führungsbereiche als parallel zueinander angeordnete Translationsbereiche ausgebildet, längs derer der Aufnahmebehälter unter Beibehaltung der Behälterlage verfahrbar ist. Die der Übergabeposition zugeordneten Führungsbereiche sind divergierend zueinander angeordnet, so daß bei Durchfahren der am Behälter angeordneten Eingriffsteile in den Führungsschienen ein Verschwenken desselben erfolgt.

Durch diese besondere Ausbildung der Führungsschienen erfolgt nicht nur eine translatorische Bewegung des Behälters von der Aufnahmeposition zur Übergabeposition, sondern auch, nach Durchfahren des Übergangsbereichs der Führungsschienen, eine Rotation des Aufnahmebehälters im Bereich der Übergabeposition, so daß das Entleeren des Behälters beim Erreichen der Übergabeposition automatisch erfolgt.

Um während der Translationsbewegung auch eine Aufwärtsbewegung des Behälters zu ermöglichen, können die parallel zueinander angeordneten Translationsbereiche der Führungsschienen schrägstehend angeordnet sein. Die zumindest teilweise übereinanderliegende Anordnung der Führungsschienen trägt zu dem bereits vorstehend erwähnten kompakten Aufbau der Führungseinrichtung bei.

Die untere der beiden Führungsschienen einer Führungsebene kann zur Fixierung der Führungseinrichtung im Raum mit einem Gestell verbunden werden. Als besonders vorteilhaft erweist es sich in diesem Zusammenhang, wenn als Gestell eine unabhängig von der Führungseinrichtung im Organentnahmebereich der Schlachtlinie ohnehin angeordnete Einrichtung genutzt werden kann. Dies ist der Fall bei einer Kopplung der unteren Führungsschienen mit Standsäulen einer im Organentnahmebereich angeordneten Arbeitsbühne, die längs den Standsäulen vertikal verfahrbar ausgebildet sein kann.

Die Antriebseinrichtung der erfindungsgemäßen Vorrichtung kann aus zwei pneumatischen Zylinder-/Kolben-Einheiten oder etwa auch aus einem motorgetriebenen Kettentrieb gebildet sein.

Bei einem bevorzugten Ausführungsbeispiel der erfindungsgemäßen Vorrichtung ist jeder der jeweils zwei Führungsschienen aufweisenden Führungsebenen eine am Aufnahmebehälter angeordnete Führungswange zugeordnet, die zum einen die voneinander beabstandet angeordneten Eingriffsteile sowie zum anderen jeweils eine zwischen den Eingriffsteilen angeordnete Anlenkeinrichtung aufweist, die zur Anlenkung von etwa als Kolbenstange oder Kette ausgebildeten Antriebselementen der Antriebseinrichtung dienen. Die am Aufnahmebehälter angeordnete Führungswange ermöglicht es, einen Aufnahmebehälter unabhängig von der ausgeführten Behälterform sicher in der Führungseinrichtung zu führen.

Das erfindungsgemäße Verfahren zur Aufnahme von Schlachttierkörperteilen, insbesondere Innereien, in einer Aufnahmeposition und Überführung eines die Innereien aufnehmenden Behälters von der Aufnahmeposition in eine Übergabeposition zur Übergabe der Innereien an eine Aufnahmeeinrichtung besteht darin, daß der Behälter zunächst aus der Aufnahmeposition unterhalb einer Schlachttierposition in einem Organentnahmebereich einer Schlachtlinie in einen Übergangsbereich der Führungseinrichtung verfahren wird. In diesem ersten Verfahrensschritt führt der Aufnahmebehälter unter Beibehaltung seiner Winkellage im Raum eine reine Translationsbewegung aus. Anschließend wird in einem zweiten Verfahrabschnitt, der vom Übergangsbereich bis zur Übergabeposition reicht, der Translationsbewegung des Aufnahmebehälters eine Rotationsbewegung überlagert. Dies erfolgt derart, daß der Aufnahmebehälter spätestens bei Erreichen der Übergabeposition die für das Entleeren des Behälters erforderliche Schwenkstellung erreicht hat.

Das erfindungsgemäße Verfahren ermöglicht somit insbesondere durch die Überlagerung der Translationsbewegung mit der Rotationsbewegung des Aufnahmebehälters ein möglichst schnelles Überführen des Aufnahmebehälters aus der Aufnahmeposition in die Übergabeposition. Die unter einem Winkel zur Horizontalebene ausgeführte reine Translationsbewegung bei der Überführung des Aufnahmebehälters von der Aufnahmeposition in den Übergangsbereich der Führungseinrichtung ermöglicht zum einen ein möglichst schnelles, da geradliniges Herausfördern des Aufnahmebehälters aus dem Bereich unterhalb der Schlachttierposition, zum anderen wird gleichzeitig Höhe gewonnen, so daß Übergabeposition zur Entleerung des Aufnahmebehälters schnell erreicht wird.

Bei einer besonders vorteilhaften Ausgestaltung des erfindungsgemäßen Verfahrens erfolgt die Verfahrbewegung des Behälters aus der Aufnahmeposition in die Übergabeposition,nachdem eine im Organentnahmebereich positionierte Arbeitsbühne aus einer Arbeitsposition in eine den Verfahrweg des Aufnahme-behälters freigebende Freigabeposition verfahren worden ist.

Durch die zeitlich aufeinanderfolgende Abfolge der Verfahrbewegungen der Arbeitsbühne und des Aufnahmebehälters in der Führungseinrichtung wird eine besonders dicht beieinanderliegende Anordnung von Arbeitsbühne und Führungseinrichtung ermöglicht, so daß sowohl die Arbeitsbühne als auch die Führungseinrichtung zum Verfahren des Aufnahmebehälters im Organentnahmebereich der Schlachtlinie angeordnet werden können, ohne den für die Förderung der Schlachttiere im Organentnahmebereich erforderlichen Raum einzuschränken.

Zur Erzielung eines vollautomatischen Verfahrens des Aufnahmebehälters in der Führungseinrichtung ist es möglich, das Erreichen der Freigabeposition durch die Arbeitsbühne mit einem Signal zu koppeln, das eine die Verfahrbewegung des Aufnahmebehälters bewirkende Antriebseinrichtung aktiviert.

Um sicherzustellen, daß die Antriebseinrichtung nur dann aktiviert wird, wenn außer dem Erreichen der Freigabeposition durch die Arbeitsbühne auch tatsächlich die Notwendigkeit besteht, den Aufnahmebehälter aus der Aufnahmeposition in die Übergabeposition zu verfahren, kann, etwa an der Arbeitsbühne, ein Tasthebel angeordnet sein, der durch Emittierung eines entsprechenden Signals die Aktivierung der Antriebseinrichtung nur dann ermöglicht, wenn die Schlachttierposition oberhalb der Aufnahmeposition des Aufnahmebehälters tatsächlich durch ein Schlachttier belegt ist.

Eine bevorzugte Ausführungsform der erfindungsgemäßen Vorrichtung sowie die Durchführung des erfindungsgemäßen Verfahrens sollen anhand der Zeichnungen nachfolgend näher erläutert werden. Es zeigen:
- **Fig. 1**: eine im Organentnahmebereich einer Schlachtlinie an Standsäulen einer Arbeitsbühne angeordnete erfindungsgemäße Vorrichtung in einer Aufnahmeposition, als Seitenansicht;
- **Fig. 2**: die erfindungsgemäße Vorrichtung gemäß **Fig. 1** in einer Übergabeposition, als Seitenansicht;
- **Fig. 3**: die in **Fig. 2** in der Übergabeposition dargestellte erfindungsgemäße Vorrichtung, in einer Seitenansicht gemäß dem Pfeil A in **Fig. 2**;
- **Fig. 4**: eine Seitenansicht des Aufnahmebehälters der erfindungsgemäßen Vorrichtung;
- **Fig. 5**: eine Draufsicht des Aufnahmebehälters gemäß **Fig. 4**.

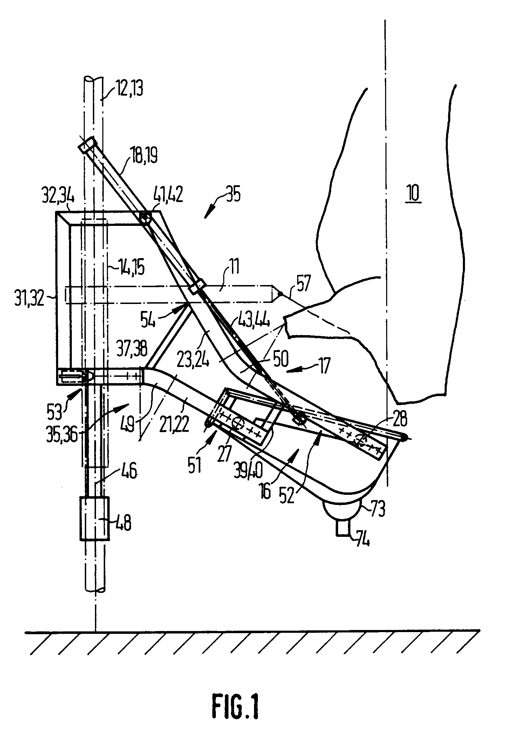

**Fig. 1** zeigt den Organentnahmebereich einer Schlachtlinie mit einem mittels eines hier nicht näher dargestellten Hakenförderers in den Organentnahmebereich eingeförderten Schlachttierkörpers 10, der neben einer Arbeitsbühne 11 hängend angeordnet ist. Die Arbeitsbühne 11 ist längs zweier Standsäulen 12, 13 verfahrbar und zu diesem Zweck mit zwei Verfahrhülsen 14, 15 versehen, die auf den Standsäulen 12, 13 geführt sind.

Die Arbeitsbühne 11 dient als Standplattform, von der aus eine hier nicht näher dargestellte Arbeitskraft den Schlachttierkörper 10 mit einer hier nicht näher dargestellten Trenneinrichtung auftrennen kann.

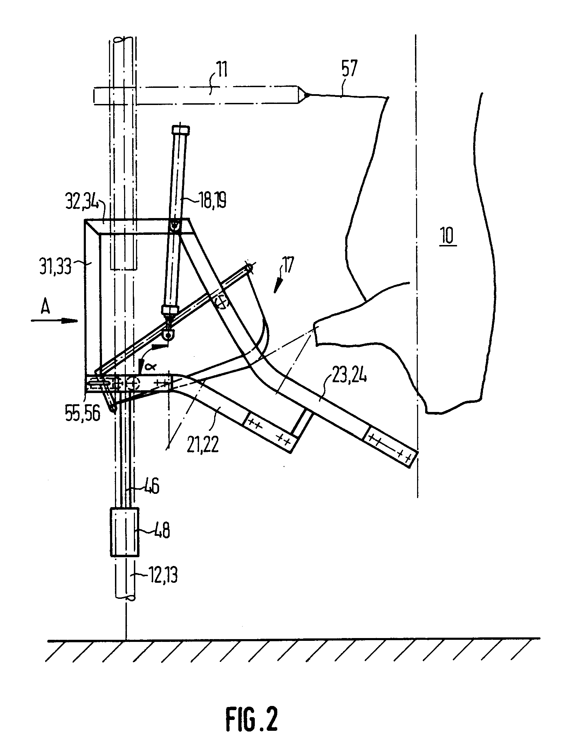

Unterhalb des Schlachttierkörpers 10 bzw. der Arbeitsbühne 11 befindet sich ein Auffangbehälter 16, der in einer Führungseinrichtung 17 mittels Zylinder-/Kolben-Einheiten 18, 19 verfahrbar angeordnet ist. Der Aufnahmebehälter 16, die Führungseinrichtung 17 sowie die Zylinder-/Kolben-Einheiten 18, 19 bilden zusammen eine Aufnahme- und Verfahr-Vorrichtung 20, die zur Aufnahme von nach dem Auftrennen aus dem Schlachttierkörper 10 entnommenen Innereien, insbesondere eines Pansenpaketes, und zum nachfolgenden Verfahren des Pansenpaketes aus einer in **Fig. 1** dargestellten Aufnahmeposition des Aufnahmebehälters 16 in eine in **Fig. 2** dargestellte Übergabeposition des Aufnahmebehälters 16 dient.

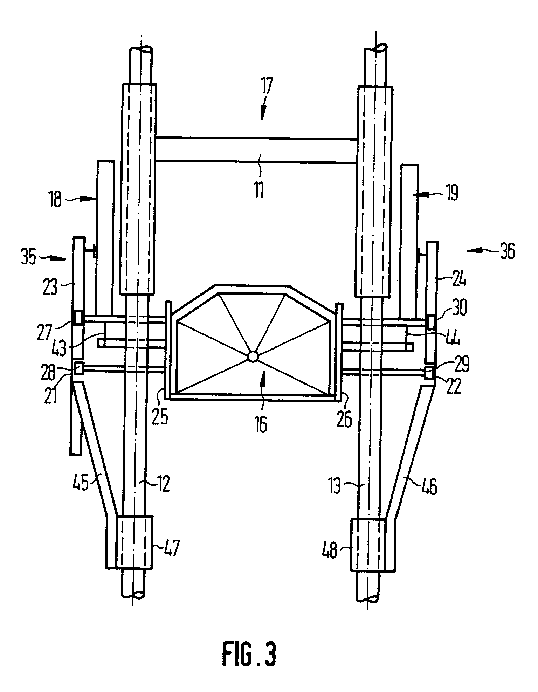

Wie insbesondere aus den **Fig. 2** und **3** zu ersehen ist, ist die Führungseinrichtung 17 aus insgesamt vier Führungsschienen 21, 22, 23, 24 aufgebaut, von denen jeweils zwei, nämlich die Führungsschienen 21, 22 und die Führungsschienen 23, 24 paarweise gleich ausgerichtet sind. Die Führungsschienen 21, 22, 23, 24 weisen ein U-förmiges Profil auf, welches mit seiner Öffnung dem zwischen den Führungsschienen 21, 22, 23, 24 aufgenommenen Aufnahmebehälter 16 zugewandt ist.

Der Aufnahmebehälter 16 weist längs seinen Seitenwandungen 25, 26 angeordnete Eingriffsteile 27, 28, 29, 30 auf, die sich jeweils einzeln mit einer Führungsschiene 21 - 24 in Eingriff befinden.

In **Fig. 1** ist eine der durch jeweils zwei Führungsschienen 22, 24 bzw. 21, 23 gebildeten Führungsebenen mit den in die Führungsschienen 22, 24 eingreifenden Eingriffsteilen 29, 30 dargestellt.

Wie in **Fig. 1** dargestellt, sind die Führungsschienen 22, 24 bzw. 21, 23 durch Rahmenzüge 31, 32 bzw. 33, 34 zu einem Führungsrahmenteil 35 bzw. 36 ergänzt. Untereinander sind die Führungsschienen 22, 24 bzw. 23, 25 durch Streben 37, 38 bzw. 39, 40 verbunden.

Grundsätzlich ist es natürlich ausreichend, den Führungsrahmenteilen 35, 36 allein durch die Streben 37, 38 bzw. 39, 40 eine genügende Stabilität zu geben. Bei dem dargestellten Ausführungsbeispiel kommt den Rahmenzügen 31, 32 bzw. 33, 34 neben der Ausbildung eines Rahmens die Aufgabe zu, jeweils ein Widerlager für eine Zylinder-/Kolben-Einheit 18 bzw. 19 zu schaffen. Natürlich ist es auch möglich, die Zylinder-/Kolben-Einheiten 18, 19 nicht an den Führungsrahmenteilen 35 bzw. 36, sondern an einem von den Führungsrahmenteilen 35, 36 unabhängigen Ort anzulenken. Bei dem hier dargestellten Ausführungsbeispiel sind die Zylinder-/Kolben-Einheiten 18, 19 in Schwenkaufnahmen 41 bzw. 42 an den Führungsrahmenteilen 35 bzw. 36 schwenkbar angelenkt.

Zum Verfahren des Aufnahmebehälters 16 in der Führungseinrichtung 17 sind die Zylinder-/Kolben-Einheiten 18, 19 mit ihren Kolbenstangen 43, 44 jeweils an einer Seitenwandung 25, 26 des Aufnahmebehälters 16 angelenkt.

Wie deutlich aus **Fig. 3** zu ersehen ist, sind zur ortsfesten Anordnung der Führungseinrichtung 17 jeweils die unteren Führungsschienen 21, 22 mit den Standsäulen 12, 13 verbunden. Hierzu erstreckt sich eine Befestigungsstrebe 45, 46 zu einer Befestigungshülse 47, 48 und ist sowohl mit der unteren Führungsschiene 21, 22 als auch mit der Befestigungshülse 47, 48, etwa durch Schweißung, fest verbunden. Die Befestigungshülsen 47, 48 weisen eine hier nicht näher dargestellte Klemmeinrichtung auf, die zum einen eine ortsfeste Verbindung der Befestigungshülsen 47, 48 mit den Standsäulen 12, 13 ermöglicht, zum anderen aber auch eine Veränderung der Installationshöhe der Führungseinrichtung 17 an den Standsäulen 12, 13 erlaubt.

Nachfolgend soll der aufgrund der besonderen Ausbildung der Führungsschienen 21, 22, 23, 24 ermöglichte Bewegungsablauf des Aufnahmebehälters 16 in der Führungseinrichtung 17 näher erläutert werden.

Die Führungsschienen 22, 24 bzw. 23, 25 jedes Führungsrahmenteils 35 bzw. 36 sind teilweise übereinanderliegend angeordnet und weisen jeweils zwei durch einen Übergangsbereich 49, 50 voneinander abgeteilte, geradlinig ausgebildete Führungsbereiche auf, die entsprechend ihren Führungseigenschaften nachfolgend als Translationsbereiche 51, 52 und Rotationsbereiche 53, 54 bezeichnet werden sollen.

Der in **Fig. 1** dargestellte Aufnahmebehälter 16 befindet sich in der Aufnahmeposition. Hierbei sind die Kolbenstangen 43, 44 der Zylinder-/Kolben-Einheiten 18, 19 in ihrer am weitesten ausgefahrenen Stellung. Am jeweils rechten Ende der Translationsbereiche 51, 52 können hier nicht näher dargestellte Anschläge vorgesehen werden, die den Aufnahmebehälter 16 in der Aufnahmeposition halten und die Kolbenstangen 43, 44 bzw. die Zylinder-/Kolben-Einheiten 18, 19 entlasten.

Ausgehend von der Aufnahmeposition wird der Aufnahmebehälter 16 durch Einfahren der Kolbenstangen 43, 44 in die Zylinder-/Kolben-Einheiten 18, 19 in Richtung auf die Übergangsbereiche 49, 50 der Führungsschienen 21 - 24 unter Beibehaltung seiner Winkellage verfahren. Wenn die vorderen Eingriff-steile 28, 29 des Aufnahmebehälters 16 die Übergangsbereiche 49 der unteren Führungsschienen 21, 23 erreichen, beginnt die reine Translationsbewegung des Aufnahmebehälters 16 beim Übergang der Eingriffsteile 28, 29 in die Rotationsbereiche 53 in eine Rotationsbewegung überzugehen. Diese Rotationsbewegung wird verstärkt, wenn die hinteren Eingriffsteile 27, 30 des Behälters 16 bei fortschreitender Verkürzung der freien Längen der Kolbenstangen 43, 44 in die Rotationsbereiche 54 der Führungsschienen 23, 24 eintreten. Dieser Verstärkungseffekt wird durch die divergiernde Anordnung der Rotationsbereiche 53, 54 der Führungsschienen 21, 22 bzw. 23, 24 zueinander erreicht. Die Rotationsbewegung ist beendet, wenn durch den zum linken Ende der Führungsschienen 21 - 24 größer werdenden Abstand der Rotationsbereiche 53, 54 bei konstantem Abstand zwischen den Eingriffsteilen 27, 28 bzw. 29, 30 eine Sperrwirkung eintritt bzw. die vorderen Eingriffsteile 28, 29 gegen am Ende der Rotationsbereiche 53, 54 vorgesehene Anschläge 55, 56 verfahren sind. In dieser Stellung befindet sich der Aufnahmebehälter 16 in der in **Fig. 2** dargestellten Übergabeposition.

Wie aus **Fig. 2** zu ersehen ist, schließen die Zylinder-/Kolben-Einheiten 18, 19 mit den Rotationsbereichen 53 der unteren Führungsschienen 21, 22 einen Winkel α ein, der größer ist als 90°. Hierdurch ist sichergestellt, daß beim Ausfahren der Kolbenstangen 43, 44, also bei Rückführung des Aufnahmebehälters 16 in die Aufnahmeposition, die Kolbenkraft um die Anschläge 55, 56 ein rechtsdrehendes Moment bildet, so daß ein Verklemmen des Aufnahmebehälters 16 beim Anfahren aus der Übergabeposition ausgeschlossen ist.

Die erfindungsgemäße Vorrichtung ermöglicht durch die besondere Anordnung der Führungsschienen 21-24, die in ihren Translationsbereichen 51, 52 parallel zueinander, schräg nach oben verlaufend ausgebildet sind, in der beschriebenen ersten Bewegungsphase ein Wegführen des Aufnahmebehälters 16 unterhalb des über ihm hängenden Schlachttierkörpers 10 bei gleichzeitiger Anhebung des Behälters 16, um für das nachfolgende Entleeren des Aufnahmebehälters 16 eine günstige Ausgangslage zu schaffen. Durch die divergierende Ausrichtung der Rotationsbereiche 53, 54 der Führungsschienen 21 - 24 und die horizontale Ausrichtung der Rotationsbereiche 53 der unteren Führungsschienen 21, 22 ist eine Kippbewegung des Aufnahmebehälters 16 unter Beibehaltung der erreichten Höhe möglich.

Wie aus den **Fig. 1** und **2** zu ersehen ist - in der Aufnahmeposition befindet sich der Aufnahmebehälter 16 unter dem Schlachtkörper 10 und in der Übergabeposition unter der Arbeitsbühne 11 -, gewährleistet die erfindungsgemäße Führungseinrichtung 17, daß der Aufnahmebehälter 16 in keiner Position den durch die Standsäulen 12, 13 und den Tierkörper 10 begrenzten Organentnahmebereich überragt. Daher ist bei der erfindungsgemäßen Vorrichtung kein zusätzlicher Raumbedarf gegeben.

Um trotz der kompakten Anordnung der erfindungsgemäßen Vorrichtung im Bereich der Arbeitsbühne 11 eine einwandfreie Funktion zu ermöglichen, wird, wie aus den **Fig. 1** und **2** ersichtlich, vor dem Verfahren des Aufnahmebehälters 16 aus der Aufnahmeposition (**Fig. 1**) in die Übergabeposition (**Fig. 2**) die Arbeitsbühne 11 entlang den Standsäulen 12, 13 aus einer Arbeitsposition (**Fig. 1**) nach oben in eine Freigabeposition (**Fig. 2**) verfahren. Hierbei ist das Erreichen der Freigabeposition durch die Arbeitsbühne 11 mit der Erzeugung eines Signals koppelbar, das die Zylinder-/Kolben-Einheiten 18, 19 zum Verfahren des Aufnahmebehälters 16 aus der Aufnahmeposition in die Übergabeposition aktiviert. Das Signal kann dadurch erzeugt werden, daß die Arbeitsbühne 11 bei Erreichen der Freigabeposition gegen einen hier nicht näher dargestellten Endschalter fährt, der etwa ein Steuersignal an ein Pneumatikventil gibt, das die etwa pneumatisch betätigten Zylinder-/Kolben-Einheiten 18, 19 steuert.

Darüber hinaus ist es möglich, wie in den **Fig. 1** und **2** dargestellt, die Arbeitsbühne 11 mit einem Tasthebel 57 zu versehen, der das Vorhandensein eines Schlachttierkörpers 10 in der für die Aufnahme von Innereien durch den Aufnahmebehälter 16 relevanten Schlachttierposition registriert und die Steuerung der pneumatischen Zylinder-/Kolben-Einheiten 18, 19 durch das Steuerventil durch Betätigung eines entsprechenden Schaltventils nur bei Vorhandensein eines Schlachttierkörpers 10 zuläßt.

Die vorstehend beschriebenen Steuermechanismen sind natürlich auch durch andere als die beschriebenen Steuerorgane realisierbar. Die beschriebenen Steuerorgane stellen lediglich eine von vielen Möglichkeiten dar.

Wie aus der Darstellung der erfindungsgemäßen Vorrichtung in **Fig. 1** ersichtlich ist, wird während der Aufnahme und der Übergabe des Pansenpaketes oder anderer Innereien jeder Kontakt der Vorrichtung, insbesondere des Aufnahmebehälters 16, mit dem Schlachttierkörper 10 verhindert. Hierdurch wird die Gefahr des Übergangs von Keimen vom Äußeren des Schlachttierkörpers 10 auf die in dem Aufnahmebehälter 16 aufgenommenen Innereien vermieden.

Bei besonders großen Schlachttierkörpern kann es angebracht sein, den Aufnahmebehälter beim Heranführen eines Schlachttierkörpers in die Pansenpaket-Entnahmeposition zurückzuhalten, um Kontakt zwischen dem Schlachttierkörper und dem Aufnahmebehälter zu vermeiden. Hierzu können etwa veränderbare Anschläge am rechten Ende der Translationsbereiche 51, 52 vorgesehen sein.

In der Aufnahmeposition ist der Aufnahmebehälter 16 so unterhalb des Schlachttierkörpers 10 angeordnet, daß aus dem Schlund des Schlachttierkörpers 10 austretende Flüssigkeit nicht in das Behälterinnere gelangen kann. Hiermit wird ausgeschlossen, daß sich Schlundflüssigkeit mit dem vom Aufnahmebehälter 16 aufgenommenen Pansenpaket bzw. der zusammen mit dem Pansenpaket in den Aufnahmebehälter 16 gelangten Körperflüssigkeit aus dem Körperinneren vermischt, um so etwa das Ergebnis nachfolgender hygienischer Untersuchungen des Pansenpaketes zu verfälschen.

Nach Entleerung des in Übergabeposition verfahrenen Aufnahmebehälters 16 in eine hier nicht näher dargestellte Aufnahmeeinrichtung kann die Untersuchung der einzelnen Bestandteile des Pansenpakets erfolgen. Durch eine entsprechende Gestaltung der Führungsschienen und/oder des Aufnahmebehälters 16 kann erreicht werden, daß nach dem Entleeren des Aufnahmebehälters 16 das Magen- und Darmpaket nebeneinander und nicht übereinander zu liegen kommen. Hierdurch wird die nachfolgende veterinärmedizinische Untersuchung erleichtert.

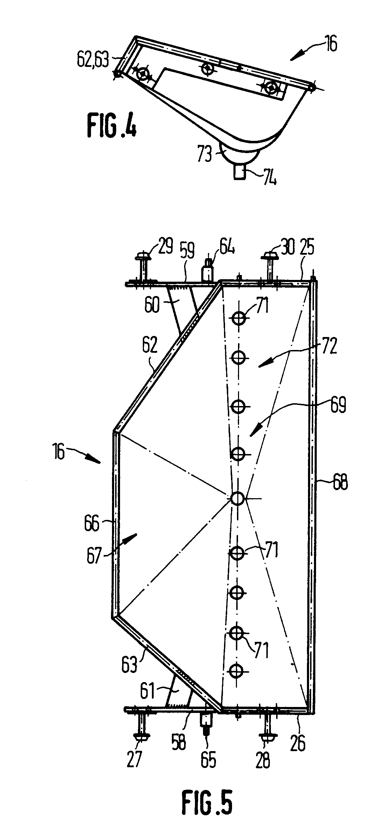

Die **Fig. 4** und **5** zeigen den Aufnahmebehälter 16 in einer vergrößerten Darstellung. Der Aufnahmebehälter 16 weist zwei gegenüberliegend angeordnete Seitenwandungen 25, 26 auf, an denen die Eingriffsteile 27, 28 bzw. 29, 30 zur Führung des Aufnahmebehälters 16 in den Führungsschienen 21 - 24 der Führungseinrichtung 17 an Führungswangen 58, 59 angeordnet sind. Die Führungswangen 58, 59 sind aus Winkelblechen gebildet und ermöglichen eine Anordnung der Eingriffsteile 27, 28 bzw. 29, 30 mit einem Abstand, der größer ist als die Länge der Seitenwandungen 25, 26. Die hierdurch die Seitenwandungen 25, 26 überragenden Führungswangen 58, 59 werden über jeweils eine Strebe 60, 61 an einer schräg zur Seitenwandung 25 bzw. 26 verlaufenden Ausgußseitenwandung 62 bzw. 63 abgestützt. Zwischen den Eingriffsteilen 27, 28 bzw. 29, 30 ist auf den Führungswangen 58, 59 jeweils ein Anlenkbolzen 64, 65 zur Anlenkung der Kolbenstangen 43, 44 der Zylinder-/Kolben-Einheiten 18, 19 am Aufnahmebehälter 16 vorgesehen.

Die Ausgußseitenwandungen 62, 63 bilden zusammen mit einer dazwischenliegend angeordneten Ausgußwandung 66 einen Ausgußbereich 67 des Aufnahmebehälters 16. Parallel zur Ausgußwandung 66 ist eine Querwandung 68 angeordnet, deren oberer Rand rechtwinklig zu den oberen Rändern der Seitenwandungen 25, 26 ausgerichtet ist und diese miteinander verbindet.

Die Öffnung des Aufnahmebehälters 16 wird durch die Ränder der Querwandung 68, der Seitenwandungen 25, 26, der Ausgußseitenwandungen 62, 63 und der Ausgußwandung 66 derart begrenzt, daß sich ein modifiziertes Rechteck als Öffnungsfläche ergibt, wobei die Modifizierung darin besteht, daß zwei Ecken des Rechtecks durch die schräg verlaufenden Ränder der Ausgußseitenwandungen 62, 63 ersetzt sind.

Wie aus **Fig. 4** zu ersehen ist, sind die Ränder der Ausgußseitenwandungen 62, 63 nach unten hin abgewinkelt, wodurch eine insgesamt muldenartige Ausgußöffnung gebildet ist.

Die einzelnen Wandungen des Aufnahmebehälters 16 sind, ausgehend von den die Öffnung des Aufnahmebehälters 16 begrenzenden Rändern, verjüngt zugeschnitten, so daß ein Abflußtrichter 69 gebildet ist. Wie insbesondere aus **Fig. 5** zu ersehen ist, ist der gesamte Aufnahmebehälter 16 zusammen mit den daran befestigten Führungswangen 58, 59 als Schweißkonstruktion ausgeführt.

Nach der Abgabe des Behälterinhalts wird der Aufnahmebehälter 16 durch nacheinander ablaufende Sprühvorgänge mit kaltem, dann mit heißem und danach wieder mit kaltem Wasser gereinigt, desinfiziert und gekühlt.

Zur Abfuhr der in den Aufnahmebehälter 16 eintretenden Körperflüssigkeit bzw. des Reinigungs- und Desinfektionswassers verfügt dieser über eine Reihe von Bohrungen 71, die sich bei Positionierung des Aufnahmebehälters 16 in der Aufnahmeposition in dessen tiefstem Bereich befinden. Die Bohrungen 71 sind dabei so angeordnet, daß sie eine Lochreihe 72 bilden. Diese Anordnung erweist sich als vorteilhaft, da hierdurch auch beim Abdecken von einer oder mehreren Bohrungen 71 durch das daraufliegende Pansenpaket die Abfuhr von Flüssigkeit gewährleistet ist. Unterhalb der Lochreihe 72 befindet sich eine an dem Aufnahmebehälter 16 befestigte Sammelrinne 73, die über einen zentral angeordneten Ablauf 74 verfügt. An dem Ablauf 74 kann in an sich bekannter Weise ein flexibler Schlauch angeschlossen werden, der seinerseits mit einem Bodenabfluß verbindbar ist. Damit ist vermieden, daß durch Körperflüssigkeit bzw. Reinigungswasser der Bodenbereich unterhalb der Entnahmevorrichtung kontaminiert wird (**Fig. 4, 5**).

## Patentansprüche

1. Vorrichtung zur Aufnahme von Schlachttierkörperteilen, insbesondere Innereien, in einer Aufnahmeposition und zur Übergabe der aufgenommenen Schlachttierteile in einer Übergabeposition an eine Aufnahmeeinrichtung,
**gekennzeichnet durch**
- einen mittels einer Eingriffseinrichtung (27,28,29,30) in einer Führungseinrichtung (17) geführten Aufnahmebehälter (16), und
- eine Antriebseinrichtung (18,19) zum Verfahren des Aufnahmebehälters (16) aus der Aufnahmeposition in die Übergabeposition längs der Führungseinrichtung (17),
wobei in der Führungseinrichtung (17) ausgebildete Führungsbahnen (21,22,23,24) eine kurvenbahnartige Ausbildung aufweisen zum Verschwenken des Aufnahmebehälters (16) um eine horizontale Behälterachse (Schwenkachse) beim Verfahren aus der Aufnahmeposition in die Übergabeposition.

2. Vorrichtung nach Anspruch 1,
**dadurch gekennzeichnet,**
daß die Führungsbahnen aus mehreren, vorzugsweise vier paarweise gleich ausgerichteten Führungsschienen (21,22,23,24) gebildet sind, in die jeweils ein an einer Behälterwandung (25,26) angeordnetes Eingriffsteil (27,28,29,30) eingreift.

3. Vorrichtung nach Anspruch 2,
**dadurch gekennzeichnet,**
daß jeweils zwei unterschiedlich ausgerichtete Führungsschienen (21,23;22,24) miteinander verbunden sind und eine Führungsebene (35,36) bilden, in der zwei Eingriffsteile (27,28;29,30), die an einer Seitenwandung (25,26) des Aufnahmebehälters (16) angeordnet sind, geführt sind.

4. Vorrichtung nach einem oder mehreren der vorangehenden Ansprüche,
**dadurch gekennzeichnet,**
daß die in einer Führungsebene (35,36) angeordneten Führungsschienen (21,23;22,24) jeweils in zwei geradlinig ausgebildete Führungsbereiche (51,53;52,54) unterteilt sind, die durch einen gekrümmten Übergangsbereich (49,50) miteinander verbunden sind.

5. Vorrichtung nach Anspruch 4,
**dadurch gekennzeichnet,**
daß die der Aufnahmeposition des Aufnahmebehälters (16) zugeordneten Führungsbereiche parallel zueinander angeordnete Translationsbereiche (51,52) zum Verfahren des Aufnahmebehälters (16) unter Beibehaltung der Behälterlage und die der Übergabeposition zugeordneten Führungsbereiche divergierend zueinander angeordnete Rotationsbereiche (53,54) zum Verschwenken des Aufnahmebehälters (16) bilden.

6. Vorrichtung nach Anspruch 5,
**dadurch gekennzeichnet,**
daß die Translationsbereiche (51,52) der Führungsschienen (21,22,23,24) unter einem Winkel zur Horizontalen und die Führungsschienen (21,22,23,24) zumindest teilweise übereinander angeordnet sind.

7. Vorrichtung nach einem oder mehreren der vorangehenden Ansprüche,
**dadurch gekennzeichnet,**
daß vorzugsweise jeweils die untere der beiden jeweils eine Führungsebene (35,36) bildenden Führungsschienen (21,22,23,24) mit einem die Anordnung der Führungseinrichtung (17) im Raum fixierenden Gestell (12,13) verbunden ist.

8. Vorrichtung nach Anspruch 7,
**dadurch gekennzeichnet,**
daß die unteren Führungsschienen (21,22) mit ihrem Rotationsbereich (53) an den Standsäulen (12,13) einer im Organentnahmebereich angeordneten, längs den Standsäulen (12,13) verfahrbaren Arbeitsbühne (11) befestigt sind.

9. Vorrichtung nach Anspruch 1,
**dadurch gekennzeichnet,**
daß die Antriebseinrichtung aus vorzugsweise zwei Zylinder-/Kolben-Einheiten (18,19) gebildet ist.

10. Vorrichtung nach Anspruch 9,
**dadurch gekennzeichnet,**
daß die Zylinder-/Kolben-Einheiten (18,19) pneumatisch betätigbar sind.

11. Vorrichtung nach Anspruch 1,
**dadurch gekennzeichnet,**
daß die Antriebseinrichtung aus einem motorgetriebenen Kettentrieb gebildet ist.

12. Vorrichtung nach einem oder mehreren der vorangehenden Ansprüche,
**dadurch gekennzeichnet,**
daß jeder der mit zwei Führungsschienen (21,22;23,24) versehenen Führungsebenen (35,36) jeweils eine am Aufnahmebehälter (16) angeordnete Führungswange (58,59) zugeordnet ist, die die voneinander beabstandet angeordneten Eingriffsteile (27,28;29,30) sowie jeweils dazwischenliegend eine Anlenkeinrichtung (64,65) zur Anlenkung der Antriebseinrichtung (18,19) am Aufnahmebehälter (16) aufweist.

13. Verfahren zur Aufnahme von Schlachttierkörperteilen, insbesondere Innereien, in einer Aufnahmeposition und Überführung eines die Innereien aufnehmenden Behälters von der Aufnahmeposition in eine Übergabeposition zur Übergabe der Innereien an eine Aufnahmeeinrichtung, insbesondere mittels einer Vorrichtung nach den Ansprüche 1 bis 12,
**dadurch gekennzeichnet,**
- daß der Aufnahmebehälter (16) zunächst unterhalb einer Schlachttierposition in einem Organentnahmebereich einer Schlachtanlage in einem Translationsbereich (51,52) einer Führungseinrichtung (17) unter Beibehaltung der Behälterlage schräg nach oben unter der Schlachttierposition hinweg bis zu einem Übergangsbereich (49,50) der Führungseinrichtung (17) und
- anschließend aus dem Übergangsbereich (49,50) der Führungseinrichtung (17) in deren Rotationsbereich (53,54) unter Änderung der Behälterlage in die Übergabeposition verfahren wird.

14. Verfahren nach Anspruch 13,
**dadurch gekennzeichnet,**
daß die Verfahrbewegung des Aufnahmebehälters (16) aus der Aufnahmeposition in die Übergabeposition nach dem Verfahren einer im Organentnahmebereich angeordneten Arbeitsbühne (11) aus einer Arbeitsposition in eine den Verfahrweg des Aufnahmebehälters (16) freigebende Freigabeposition erfolgt.

15. Verfahren nach Anspruch 14,
**dadurch gekennzeichnet,**
daß durch das Verfahren der Arbeitsbühne (11) in die Freigabeposition eine den Aufnahmebehälter (16) verfahrende Antriebseinrichtung (18,19) aktiviert wird.

16. Verfahren nach Anspruch 15,
**dadurch gekennzeichnet,**
daß die Antriebseinrichtung (18,19) zum Verfahren des Aufnahmebehälters (16) nach Erreichen der Freigabeposition der Arbeitsbühne (11) und Feststellen des Vorhandenseins eines Schlachttiers (10) oberhalb des Aufnahmebehälters (16) erfolgt.
